Europäisches Patentamt

European Patent Office

Office européen des brevets

(11) Publication number: **0 339 157**
**A2**

## (12) EUROPEAN PATENT APPLICATION

(21) Application number: **88310265.9**

(51) Int. Cl.⁴: **G06F 12/02 , G06F 12/10**

(22) Date of filing: **01.11.88**

(30) Priority: **26.04.88 IT 6738288**

(43) Date of publication of application:
**02.11.89 Bulletin 89/44**

(84) Designated Contracting States:
**DE FR GB**

(71) Applicant: **Ing. C. Olivetti & C., S.p.a.**
**Via G. Jervis 77**
**I-10015 Ivrea(IT)**

(72) Inventor: **Schinco, Antonio**
**Via Torino 115**
**I-10015 Ivrea (To)(IT)**
Inventor: **Peveraro, Giovanni**
**Via Castellamonte 33**
**I-10010 Banchette (To)(IT)**

(74) Representative: **Pears, David Ashley et al**
**REDDIE & GROSE 16 Theobalds Road**
**London WC1X 8PL(GB)**

(54) **Address translating apparatus for a computer memory.**

(57) The logical address of the memory (12) is translated into a physical address on a series of successive levels and in branched form. The apparatus comprises a root table (27) which is addressed by a series of machine condition signals to provide a corresponding descriptor of the segment to be addressed. That descriptor, in combination with a part of the logical address, is used to address a table of segments (31), which in response can provide a descriptor of the page of memory to be addressed. The last-mentioned descriptor, in combination with another part of the logical address, is used to address a table of pages (32), which in response provides at least a part of the physical address. The apparatus comprises a cache memory (30) for storing a series of translation operations which have been effected. This memory is explored before the translation cycle which is initiated only if the logical address being sought is not among those stored thereby.

FIG.1

## ADDRESS TRANSLATING APPARATUS FOR A COMPUTER MEMORY

The present invention relates to an address translating apparatus for a memory of a computer as defined in the introductory portion of claim 1.

Virtual memory translation apparatuses are known, in which logical memory address is translated on each occasion into the physical address of the memory. Provided in a known control unit is a series of units for mapping segments of the memory. Those segments are selected for each translation operation by means of a series of masks capable of defining the field of addresses of each segment. That translation apparatus is therefore not suitable for effecting address translation at page level, so that it is not flexible.

In another known translation apparatus, it has also been proposed that use be made of a series of root tables for generating the descriptors, thereby to address a corresponding table of physical page addresses. That control unit permits address translation only at page level so that it requires tables of enormous capacity.

The object of the invention is to provide a translation apparatus capable of reducing the memory capacity required by the tables and permitting the maximum degree of flexibility in translation from the logical address to the physical address.

To this end the present invention provides the translation apparatus which is defined in claim 1.

These other features of the invention will be more clearly apparent from the following description of a preferred embodiment which is given by way of non-limiting example with reference to the accompanying drawings in which:

Figure 1 is a block diagram of a computer incorporating the translation apparatus according to the invention,

Figure 2 is a detailed diagram of the translation apparatus,

Figure 3 is an operating diagram of the translation apparatus,

Figures 4 to 7 show information format layouts used in the translation apparatus, and

Figure 7 is a diagrammatic representation of an alternative form of a detail from the apparatus shown in Figure 2.

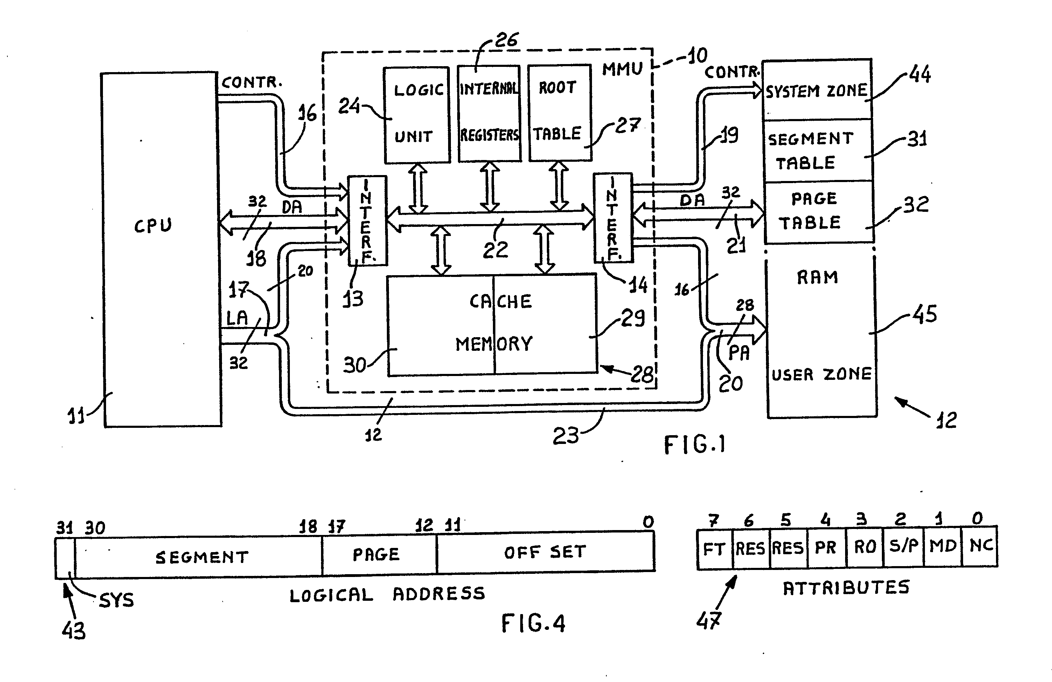

The address translation apparatus comprises a control unit or MMU which is generally indicated at 10 in Figure 1 and which is incorporated into a computer. It comprises a 32-bit central processing unit or CPU 11 and an operating random access memory or RAM 12 of high capacity.

The RAM can be subdivided into a series of blocks each comprising 64 memory segments. Each block has a capacity of 16M bytes while each segment has a capacity of 256K bytes and can be subdivided into 64 pages, each with a capacity of 4K bytes. It will be clear therefore that the RAM 12 can be subdivided into blocks, segments and pages which are organised in a hierarchical manner.

The RAM is addressed by means of a physical address obtained by the MMU 10, starting from a logical address with a translation on a series of successive levels and in branched form, as will be seen in greater detail hereinafter. In particular the MMU 10 comprises a first interface 13 in relation to the CPU 11 and a second interface 14 in relation to the RAM 12. The interface 13 is connected to the CPU 11 by means of a bus 16 for a series of control signals, a bus 17 for the logic addresses LA and a bus 18 for data DA, of 32 bits. The interface 14 is connected to the RAM 12 by means of a bus 19 for a series of control signals, a bus 20 for the physical addresses PA and a bus 21 for data DA, of 32 bits. The two interfaces 13 and 14 are connected by an internal bus 22 to the MMU 10. The logical address is formed by 32 bits of which the twelve least significant bits constitute the offset, that is to say the address of the specific memory cell in each page or segment. They can be transmitted directly to the RAM 12, for example by way of a bus 23. The 20 most significant bits however are passed to the MMU 10. The physical address is formed by 28 bits of which 12 least significant bits coming from the bus 23 constitute the offset while the 16 most significant bits constitute the physical address of the block.

The MMU 10 also comprises a logic control unit 24 which is connected to the bus 22 and which is capable of controlling the various functions of the MMU 10 on the basis of the control signals received. A series of registers 26 which are internal to the MMU 10 is connected to the bus 22 and serves for controlling the translation operations and the protection operations of the RAM 12. The MMU 10 further comprises a root table 27 formed by a series of registers which are also connected to the bus 22 and which are capable of being addressed to provide a series of root descriptors. Finally the MMU 10 comprises a cache memory 28 which is also connected to the bus 22 and which is capable of retaining a series of logical address and the corresponding physical addresses recently used in two associated memory blocks 29 and 30. The memory 28 is of a 5K bit capacity so that the two blocks 29 and 30 each capable of containing 128 20 bit data items.

The translation apparatus further comprises a sector table 31 which can be addressed for selectively providing a descriptor of the physical address of a memory sector which is not subdivided into pages (non-paged) or a descriptor of the physical address of a memory sector which is subdivided into pages (paged). Finally a page table 32 can be addressed in dependence on the descriptor of a paged sector to provide a descriptor of the physical address of the memory page. The two tables 31 and 32 may be resident in two zones of the same RAM 12, as indicated in Figure 1.

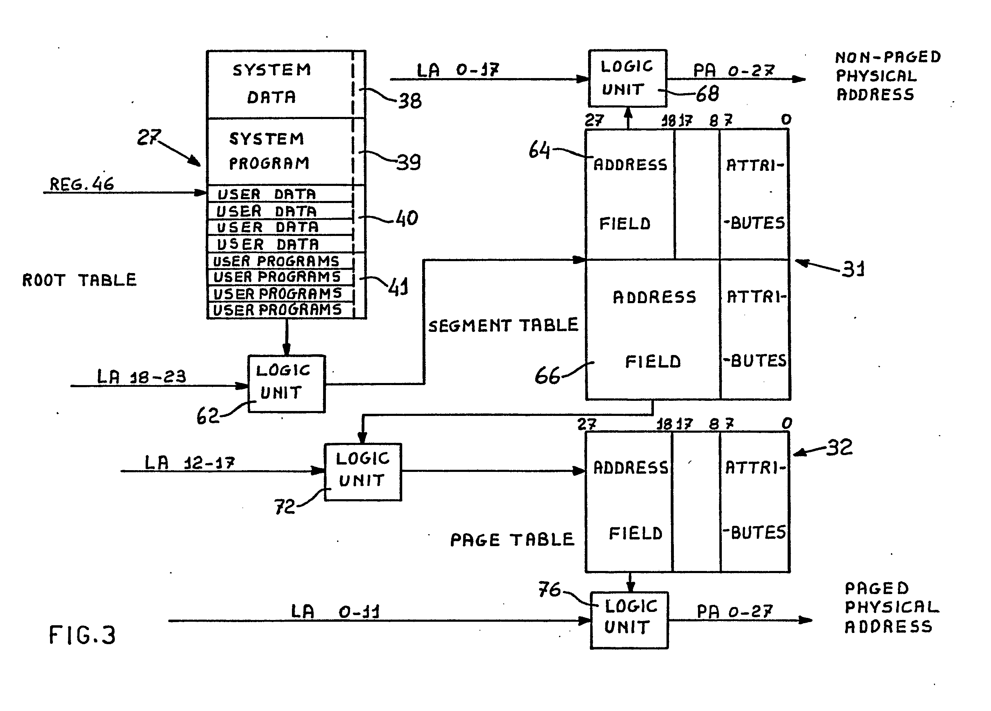

The detectors provided by the tables 31 and 32 (Figure 3) are always represented by 28 bits. Since the RAM 12 is a 32 bit memory, bits 28-31 must always be at zero. In addition the bits 0-7 of those descriptors constitute the field of the attributes of the segment or the page, that is to say a representation of particular constraints or conditions of the segment or the page, as will be seen in greater detail hereinafter. The descriptors of the tables 31 and 32 are loaded during initialisation of the computer.

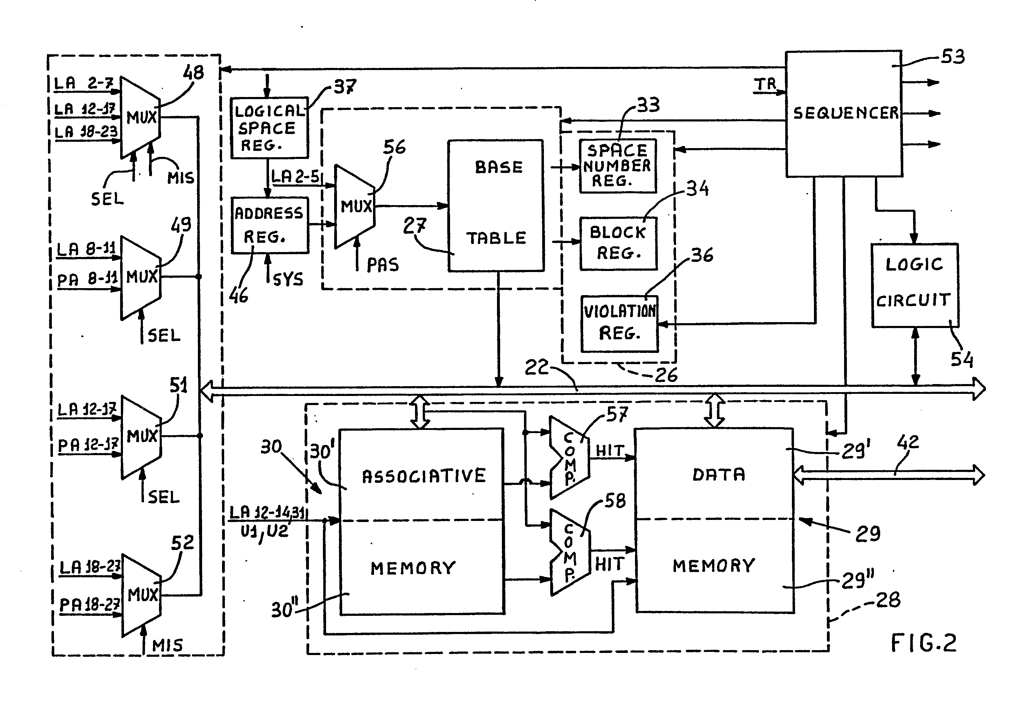

The group of registers 26 (Figure 2) comprises four registers 33, 34 and 36 which must be initialised when starting up the computer before the MMU 10 is enabled for the translation operation. The 16 bit register 32 indicates the memory space number to which the translation operation refers, that is to say the present user, among four possible users, to whom that space has been assigned. The register 34 which is also a 16 bit register defines the number of blocks of segments which can be used in the RAM 12 while the 16 bit register 36 is capable of containing an indication of the causes of memory violation detected by the MMU 10 on the basis of the attributes registered in the relative segment or page descriptor.

Finally a three bit register 37 indicates the logic space required, being capable of containing a function code FC2-FC0 to indicate the status, that is to say the function of the space to which the current cycle of the CPU 11 refers. Following Table I gives the truth table of that code:

TABLE I

| Logic space | FC2 | FC2 | FC0 |
|---|---|---|---|
| Supervisory program | 1 | 1 | 0 |
| Supervisory data | 1 | 0 | 1 |
| User program | 0 | 1 | 0 |
| User data | 0 | 0 | 1 |
| CPU | 1 | 1 | 1 |

The first two spaces are used by the CPU 11 when it is in the supervisory program state for extracting instructions and storing data. The second two spaced are used by the CPU when it is in the user program state for extracting instructions and storing data. The last space is reserved exclusively for access of the CPU 11 whereby it is not subjected to any address translation operation on the part of the MMU 10. It will be clear therefore that the bit FC1 = 0 always indicates a data space in the memory while the bit FC2 = 0 indicates that this involves spaces assigned to the user and that the user spaces can be assigned to a single user or subdivided into a plurality of users, for example four.

The root table 27 is formed by 16 32 bit registers divided into groups each consisting of four registers. Two groups of registers 38 and 39 (Figure 3) are assigned to the data and the programs of the system while the other two groups 40 and 41 are assigned to the user data and programs. In the case in which there are four users, a register of the group 40 and a register of the group 41 corresponds to each user.

The block 29 (see Figure 2) of the cache memory 28 constitutes a data memory for storing the portions of the physical address involved in the operation of translation of the logical address, that is to say the portions of physical address contained in the field of the bits PA12-27. The block 29 passes the physical address data by way of the bus 22 to the interface 14 (see Figure 1) of the MMU 10.

In addition associated with each physical address on the block 29 (Figure 2) is a group of signals which are indicative of the protections of the respective memory zone which are derived from the associated attributes. Those signals, by way of a bus 42, are passed to the control bus 19 (Figure 1). The block 29 is subdivided into two modules 29′ and 29″ (Figure 2) respectively for the data relating to the memory spaces assigned to the system and for those assigned to the users, as will be seen in greater detail hereinafter.

The block 30 of the cache memory 28 is subdivided into two associative memory modules. One module 30′ is dedicated to storing up to 64 logic addresses which are already translated for the system spaces in the RAM 12. The other module 30″ is dedicated to storing up to 64 logical addresses which are already translated for the user spaces in the RAM 12. The modules 30′ and 30″ are connected by way of the bus 22 to the input interface 13 (Figure 1) of the MMU 10.

3

In particular the two associative memory modules 30' and 30" are addressed by an SET code formed by two bits U1 and U2 which are indicative of the user and the signals of the logic address LA12-14 and 31 supplied by the CPU 11. Corresponding to such address, the modules store a code TAG which represents the remaining part of the logic address, which goes by way of the bus 22. Therefore the cells of the modules 30' and 30" store identifiers of the corresponding physical addresses of the block 29.

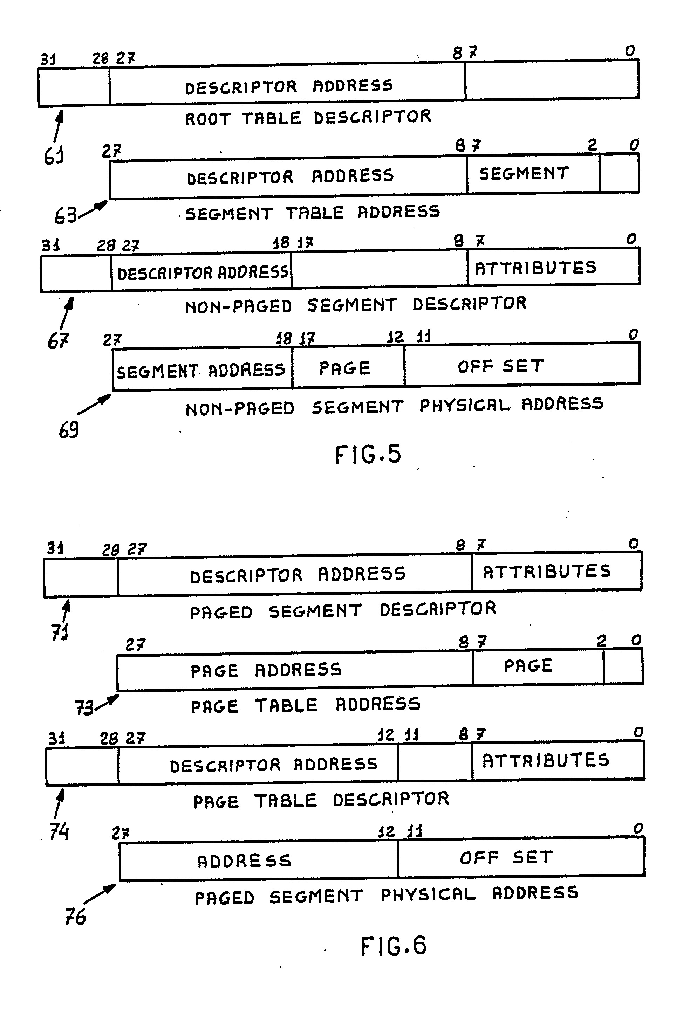

With reference to Figure 4, reference numeral 43 indicates the format of the logical address. It comprises the offset in the bits LA0-11, the logical page address in the bits LA12-17 and the logical segment address in the bits LA18-30. The bit LA31 contains a code SYS adapted to divide the space of the logical address into two parts. If SYS = 0, a zone 44 of the RAM 12 which is assigned to the system programs and data is addressed. If SYS = 1, a zone 45 of the RAM 12 which is assigned to the user programs and data is addressed. The bit SYS is combined in an addressor 46 (Figure 2) with the code FC2-FC0 contained in the register 37 for addressing the registers of the root table 27.

In Figure 4, reference numeral 47 represents the format of the field of attributes, each of which is represented by a bit which is set to one. The symbol inserted in each bit of the format 47 represents the attribute in accordance with following Table II.

TABLE II

| Symbol | Attribute |
|--------|-----------|
| FT | Error: if the operation being performed is blocked |
| RES | Reserved for specific uses |
| PR | Privileged for use in supervisory state |
| RO | Reserved for reading only |
| SP | Assumes different significance in the segment descriptor and the page descriptor |
| MD | Segment or page written by the CPU |
| NC | Address which cannot be stored in the system cache memory |

The logic unit 24 comprises a group for four multiplexers 48, 49, 51 and 52 (Figure 2). The multiplexer 48 receives the bits LS2-7 and LA12-13 of the logical address and is controlled by two binary signals SEL and MIS generated by a sequencer 53. The multiplexers 49 and 51 are capable of receiving respectively the bits 8-11 and the bits 12-17, both of the logical addresses LA and the physical addresses PA, and are controlled by the signal SEL. The multiplexer 52 is adapted to recieve the bits 18-27 both of the addresses LA and of the physical addresses PA and is controlled by the signal MIS. Therefore the signals SEL and MIS serve to permit selective passage through the multiplexers 48, 49, 51 and 52 both of the physical addresses PA and the logical addresses LA. In the second case the two signals permit the selective passage of each field of the logical address in a predetermined time sequence.

The sequencer 53 is controlled by a high level signal TR emitted by the CPU 11 (Figure 1) for selectively controlling a series of sequences of operations of the MMU 10 in cases in which the input addresses are logical addresses. When the signal TR is at low level, the sequencer 53 (Figure 2) excludes the translation operation so that the input addresses PA 0-27 at the multiplexers 48, 49, 51 and 52 are used directly for accessing the RAM 12.

The sequencer 53 is also capable of generating a series of signals for controlling registration in the register 36 of memory violations, based on limits supplied by the registers 33 and 34. Another series of signals serves for controlling registration of the logical and physical addresses in the cache memory 28. Finally the sequencer 53 is capable of controlling a logic circuit 54 which, as will be seen in greater detail hereinafter, sequencially controls the various levels of translation of the address.

The logic unit 24 (Figure 1) also comprises a multiplexer 56 (Figure 2) which, under the control of a signal PAS emitted by the sequencer 53, is capable of providing for the selective passage of the address of the table 27 given by the register 46, or a series of data for initialisation of the bits LA 2-5 to be recorded in the registers of the table 27.

Finally the memory 28 comprises a pair of comparators 57 and 58 which can be controlled by the sequencer 53 for sequencially comparing the logic address received by the multiplexers 49, 51 and 52 to the logic addresses stored in the respective modules 30' and 30" of the associative memory 30. In this situation where the received address has been stored in the memory, the comparator 57, 58 outputs a signal HIT which enables the corresponding module 29', 29" of the memory 29 to send the corresponding registered physical address on the bus 22.

As already stated the root table 27 is addressed by means of the content of the register 46. The descriptor which is read in correspondence with the address is of the format indicated at 61 in Figure 5. In particular the field of the bits 8-27 of that format contains the code of the descriptor in the true sense while the bits 0-7 and 28-31 are always at zero. A circuit 62 (Figure 3) included in the logic circuit 54 (Figure 2) then combines the bits 8-27 of the descriptor 61 which is extracted from the table 27 with the bits 18-30 of the logic address 43 (Figure 4) to generate a physical address for the segment table 31 (Figure 3).

The format of the physical address of the table 31 is indicated at 63 in Figure 5. It is formed by 28 bits of which bits 8-27 correspond to the bits 8-27 of the descriptor 61 while the bits 2-7 correspond to the bits 18-27 of the logic address 43. The table 31 (Figure 3) is subdivided into two parts 64 and 66. The part 64 provides the descriptors for the addresses of the non-paged memory segments, while the part 66 provides the descriptors for the addresses of the paged segments.

In the segment descriptors which are given by the table 31, the attribute S/P of the format 47 (Figure 4) is indicative of the type of segment. If S/P is at level one, that indicates that that is a non-paged segment, while if it is at level zero, that indicates that it is a paged segment.

In Figure 5, reference numeral 67 indicates the format of the descriptors for the addresses of the non-paged segments. Therein the address field of the descriptor is limited to bits 18-27 while the bits 0-7 constitute the attributes and the bits 8-17 and 28-31 are always at zero.

The address field of the descriptor of format 67 of the non- paged memory segments, which is extracted from the table 31 (see Figure 3), is combined in a circuit 68 which is also included in the logic circuit 54 with the portion with the logical address of format 43 (see Figure 4) which is between the bits 0 and 17, to form the physical address of the RAM 12, that is to say the particular 32 bit cell which is to be addressed in the preselected non-paginated segment. In particular the field 18-27 of the format 67 forms the most significant bits PA18-27 from the physical address, the format of which is indicated at 69 in Figure 5. The field 0-17 of the format 43 however forms the least significant bits PA0-17 of the physical address.

The format of the descriptors for the addresses of the paged segments is indicated at 71 in Figure 6. Therein the bits 0-7 constitute the attributes field while the bits 8-27 constitute the address field of the descriptor. That field is combined in a circuit 72 (Figure 3) included in the logic circuit 54 with the portion of the logic address of format 43 (Figure 4) included between the bits 12 and 17 indicative of the page, to form the address of the page table 32. The format of that address is indicated at 73 in Figure 6. Therein the bits 8-27 of the address field of the format 71 constitute the most significant bits of the address of the table 32 while the bits 12-17 of the logic address of format 43 constitute the least significant bits of the table 32.

The descriptor of the page table 32 is of the format 74 in which the field relating to the address is that of the bits 12-27. The bits 8-11 and the bits 28-31 are however always at zero while the bits 0-7 constitute the attributes of the page in accordance with the format 47 (Figure 4). In them, if the attribute S/P is at level one, it indicates that the page is not to be retained in the cache memory of the CPU 11, but if S/P is at level zero, the page is to be retained in the cache memory.

The addresses field of the bits 12-27 of the descriptor of format 74 (see Figure 6) is combined in a circuit 76 (see Figure 3) included in the logic circuit 54 with the offset portion of the logic address which is contained in the bits 0-11 of the format 43 (Figure 4) to form the physical address of the RAM 12, that is to say the particular 32 bit cell in the preselected page of the segment. In particular the bits 12-27 of the address field of the descriptor of format 74 constitute the most significant bits PA12-27 of the physical address, the format of which is indicated at 76 in Figure 6. The field 0-11 of the logic address 43 however forms the offset of the physical address.

It will be clear therefore that translation of the address is effected by means of exchange of data between the MMU 10 (Figure 1) and the tables 31 and 32 of the RAM 12 at a series of successive levels and in hierarchical (segments, pages) and branched form.

All in all, operation of the logic address translation apparatus is as follows:

When the CPU 11 emits an RAM 12 address, it is passed to the MMU 10. If the address is of physical type, the CPU 11 emits the low-level signal TR. The sequencer 53 (Figure 2) then does not enable translation of the address whereby the bits 12-27 thereof pass directly through the bus 22 and by way of the interface 14 (Figure 1) reach the RAM 12. Those bits together with the bits of the offset which pass along the bus 22 then directly address the RAM 12 whereby the MMU 10 is transparent with respect to the address.

If however the address emitted by the CPU 11 is of logical type, the CPU 11 also emits a high-level signal TR (Figure 2), and the sequencer 53 enables operation of the MMU 10. At the beginning the sequencer 53 controls searching for the logic address in the block 30 of the memory 28, selectively enabling one of the comparators 57 and 58 defined by the signal SYS. The addresses recorded in the corresponding module 30', 30" are then sequentially compared to the bits 12-27 of the logic address being sought.

If the translation of that logic address had already been recorded in the memory 28, the comparator 57, 58 concerned generates a signal HIT. That causes the data in respect of the translation to be extracted from the corresponding module 29$'$, 29$''$ of the memory 28, that is to say part of the physical address and the associated control signals which by way of the bus 22 and the interface 14 are passed to the RAM 12 (Figure 1). That part of the physical address together with the offset of the bus 23 now directly addresses the RAM 12 whereby the translation cycle is not performed.

If however the selected comparator 57, 58 does not generate the signal HIT, the sequencer 53 causes a branched translation cycle to begin. It is now controlled by the logic circuit 54 by way of sequencial addressing of the tables 27, 31 and 32 (see Figure 3), as described hereinbefore.

At the end of that translation cycle, on the one hand the physical address is used by the CPU 11 for accessing the RAM 12, as in the previous case, while on the other hand the sequencer 53 causes recording of the part of the logical address in the relative module 30$'$, 30$''$ of the associative data memory 30 and recording of the corresponding translated physical address in the module 29$'$, 29$''$ of the data memory 29. The two pairs of modules 29$'$, 30$'$ and 29$''$, 30$''$ may be recorded by a FIFO procedure whereby when all the 64 cells of a pair of modules have been recorded, prior to the new recording operation cancellation of the logic address and the associated physical address which have been recorded in the modules for a longer time is ordered. Alternatively the two pairs of modules 29$'$, 30$'$, 29$''$, and 30$''$ may be recorded using the LRU procedure in which the cell which has been least recently used is cancelled.

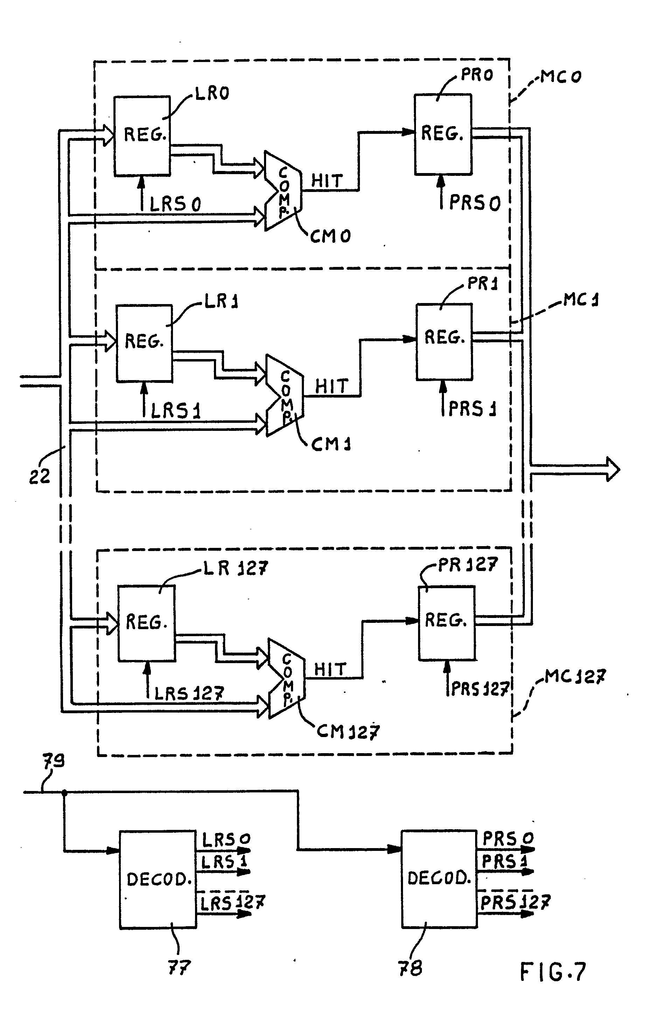

In the embodiment shown in Figure 7, the cache memory 28 is formed by a fully associative memory formed by a series of megacells MC0, MC1...MC127. Each megacell MC comprises a logical address register LR0, LR1...LR127 associated with a corresponding physical address register PR0, PR1, ...PR127. A corresponding comparator CM0, CM1, ... CM127 is disposed between each register LR and the corresponding register PR. Each comparator CM is capable of comparing the logical address from the bus 22 to that recorded in the corresponding register PR and, in the event of identity emits a signal HIT which enables reading of the corresponding register PR for addressing the RAM 12.

Recording of the addresses in the megacells MC may also be effected using the FIFO procedure or the LRU procedure. More generally, there are provided two decoders 77 and 78 respectively associated with the registers LR and the registers PR. The decoder 77 s capable of generating signals LRS0...LRS127 for selection of the register LR while the decoder 78 is capable of generating signals PRS0...PRS127 for selection of the registers PR. Each time the two decoders 77 and 78 receive the selection code from the CPU by way of a channel 79 whereby the sequence of recording of the megacells MC may be programmed in accordance with any criterion.

The accompanying drawings, for the purposes of simplifying the description, do not show various timing, control and strobe signals. It will be appreciated that such omissions do not adversely affect the clarity of the description.

It will be appreciated that the described apparatus may be the subject of various modifications and improvements without departing from the scope of the invention as claimed.

## Claims

1. Address translating apparatus (10) for a memory (12) of a computer (11) which is capable of translating a logical memory address into a corresponding physical address, characterized in that it is adapted to effect the translation operation at a series of successive levels and in hierarchical and branched form.

2. Apparatus according to claim 1, characterized in that each translation level is effected by addressing a table of descriptors (27, 31, 32), the descriptor extracted from the table then being combined with a portion of the logical address to address the table of the subsequent level.

3. Apparatus according to claim 2, characterized in that it comprises a root table (27) addressable by a series of machine condition signals (REG.46) for providing a corresponding descriptor (61) of the memory segment to be addressed, logic means (24) responsive to the descriptor to provide the address (63) of a segment table (31) which provided a descriptor (71) of the memory page to be addressed, a page table (32) being addressed by the page descriptor to provide the physical address (76) of the page in the predetermined segment.

4. Apparatus according to claim 3, characterized in that the said logic means (24) are capable of selectively defining the segment descriptor (61) as the physical address of the predetermined segment.

5. Apparatus according to claim 3 or 4, characterized in that at least one of the tables (31, 32) is contained in a zone of the memory (12), whereby the translation operation is effected by means of an exchange of data between the translating apparatus and the memory.

6. Apparatus according to any of claims 3 to 5, characterized in that the descriptors (67, 71, 74) comprise a series of signals of attributes of the individual memory portions.

7. Apparatus according to any of claims 3 to 6, characterized in that the logic means (24) comprise a sequencer (53) capable of sequentially generating a selection of commands for combining the descriptors which are addressed with corresponding portions of the logical address.

8. Apparatus according ot claim 7, characterized by a series of registers (26) for recording limitations for access to the individual memory portions, the sequencer (53) capable of sensing violations of the limitations and up-dating the recording of the limitations and violations.

9. Apparatus according to claim 8, characterized in that the sequences of signals generated by the sequencer (53) depend both on said attributes and the violations of the limitations.

10. Apparatus according to any of claims 7 to 9, characterized by a high-speed cache memory (28) adapted to store a series of translated logical addresses, comparison means (57, 58) being controlled by the sequencer (53) to compare the addresses to each logical address received to exclude the translation operation when the corresponding translated logical address is already stored.

11. Apparatus according to claim 10 characterized in that the cache memory (28) comprises two identical blocks (29, 36), one for recording the logical addresses and the other for recording the corresponding physical addresses, the blocks being recorded with a FIFO, LRU or such procedure.

12. Apparatus according to claim 11, characterized in that the memory (12) can be subdivided into program and data spaces both in respect of system and user, each block of the cache memory (28) being subdivided into two modules for recording of system addresses and user addresses respectively.

13. Apparatus according to claim 12, characterized in that the user spaces may be subdivided among a plurality of independent users.

14. Apparatus according to claim 13, characterized in that the root table (27) is formed by a series of registers (38-41) which can be recorded with descriptors relating to memory segments in accordance with the space subdivision.

15. Apparatus according to claim 14, characterized in that the root table (27) and the segment and page tables (31, 32) are loaded by the central unit (11) upon initialisation of operation of the computer on the basis of the configuration of the system and the number of users.

FIG.1

| | SEGMENT | PAGE | OFF SET |
|---|---|---|---|
| 31 30 | 18 17 | 12 11 | 0 |

SYS

LOGICAL ADDRESS

FIG.4

| FT | RES | RES | PR | RO | S/P | MD | NC |
|---|---|---|---|---|---|---|---|
| 7 | 6 | 5 | 4 | 3 | 2 | 1 | 0 |

ATTRIBUTES

EP 0 339 157 A2

FIG.2

FIG.3

EP 0 339 157 A2

| 31 | 28 27 | | 8 7 | | 0 |
|----|-------|-------------------------|-----|---|---|
| | | DESCRIPTOR ADDRESS | | | |

ROOT TABLE DESCRIPTOR

61

| 27 | | 8 7 | | 2 | 0 |
|----|-----------------|-----|---------|---|---|
| | DESCRIPTOR ADDRESS | | SEGMENT | | |

SEGMENT TABLE ADDRESS

63

| 31 | 28 27 | 18 17 | 8 7 | 0 |
|----|-------|-------|-----|---|
| | DESCRIPTOR ADDRESS | | ATTRIBUTES | |

NON-PAGED SEGMENT DESCRIPTOR

67

| 27 | 18 17 | 12 11 | 0 |
|----|-------|-------|---|
| SEGMENT ADDRESS | PAGE | OFF SET | |

NON-PAGED SEGMENT PHYSICAL ADDRESS

69

FIG.5

| 31 | 28 27 | | 8 7 | | 0 |
|----|-------|-------------------------|-----|---|---|
| | | DESCRIPTOR ADDRESS | | ATTRIBUTES | |

PAGED SEGMENT DESCRIPTOR

71

| 27 | | 8 7 | | 2 | 0 |
|----|-----------------|-----|------|---|---|
| | PAGE ADDRESS | | PAGE | | |

PAGE TABLE ADDRESS

73

| 31 | 28 27 | 12 11 | 8 7 | 0 |
|----|-------|-------|-----|---|
| | DESCRIPTOR ADDRESS | | ATTRIBUTES | |

PAGE TABLE DESCRIPTOR

74

| 27 | 12 11 | 0 |
|----|-------|---|
| ADDRESS | OFF SET | |

PAGED SEGMENT PHYSICAL ADDRESS

76

FIG.6

FIG·7